# FASCICULE DE BREVET EUROPEEN

(11) **EP 4 305 330 B1**
(45) Date de publication et mention de la délivrance du brevet: **02.10.2024**
(21) Numéro de dépôt: 22713553.0
(22) Date de dépôt: 03.03.2022
(51) Int. Cl.: F16L 3/24, H02G 3/04, F16L 3/04, H02G 3/32, F16L 3/26

(54) **CHEMIN DE CÂBLE D'AÉRONEF AVEC PISTON**
FLUGZEUGKABELKANAL MIT KOLBEN
AIRCRAFT CABLE TRAY WITH PISTON

(30) Priorité: 09.03.2021 FR 2102241
(43) Date de publication de la demande: 17.01.2024
(73) Titulaire: LATELEC, 31500 Toulouse (FR)
(72) Inventeur: NICHOLAS, Jay, Llantrisant CF728 DU (GB); VINAYAN SUDHA, Streeghosh, Kollam - Kerala 691302 (IN)
(74) Mandataire: Junca, Eric
(86) Numéro de dépôt international: PCT/EP2022/055458
(87) Numéro de publication internationale: WO 2022/189262

(56) Documents cités:
- WO-A2-2011/027002
- FR-A1- 2 925 781
- JP-A- 2014 093 817
- US-A1- 2013 075 153

## Description

### DOMAINE TECHNIQUE

L'invention concerne le domaine de l'aéronautique et vise l'agencement des chemins de câble au sein des architectures électriques d'aéronef.

Les chemins de câble d'aéronef définissent les trajets des harnais de câblage électrique par rapport à la structure d'un aéronef, en les maintenant en position et en les protégeant. Les harnais de câblage électrique sont constitués des faisceaux de câbles cheminant entre diverses installations électriques de l'aéronef.

### ART ANTÉRIEUR

Les chemins de câble d'aéronef sont généralement constitués par des profilés s'étendant dans le prolongement les uns des autres. Entre certains profilés, un écart prédéterminé est prévu pour permettre un mouvement relatif des profilés sans dommage. Les chemins de câbles d'aéronef peuvent en effet être fixés sur des parties structurelles de l'aéronef qui peuvent être flexibles. Par exemple, les chemins de câble s'étendant le long des ailes d'un avion sont soumis à un mouvement de flexion d'amplitude relativement importante lors du vol de l'avion.

Au sein de chaque profilé, les chemins de câble connus comportent des inserts disposés dans chaque canal de guidage de câble. Ces inserts comportent divers éléments tels que des colonnes crantées disposées sur les parois internes du canal de guidage et permettant de presser un élément contre les harnais afin de les maintenir en place. Ces inserts sont généralement couteux et leur mise en place allonge le temps de montage de l'aéronef (de nombreux inserts sont prévus pour un chemin de câble, et un aéronef comporte de nombreux chemins de câble). Leur encombrement nécessite de plus un dimensionnement en conséquence des chemins de câble, avec des canaux de guidage de câble plus larges que le strict nécessaire imposé par l'encombrement du harnais à maintenir, et donc un surcout et un surpoids en conséquence.

De tels chemins de câble sont décrits, notamment, dans le US 2013/075153A1 et le JP 2014/093817A.

### EXPOSÉ DE L'INVENTION

L'invention a pour but d'améliorer les agencements de chemins de câbles au sein des aéronefs de l'art antérieur.

À cet effet, l'invention vise un chemin de câble d'aéronef comportant un profilé qui comprend deux parois latérales s'étendant parallèlement à un plan latéral de rétention, chaque paroi latérale présentant une face externe et une face interne, ce profilé délimitant au moins un canal de guidage de câble s'étendant parallèlement au plan latéral de rétention, ce chemin de câble d'aéronef comportant :
- un rebord latéral saillant de la face externe d'une paroi latérale du profilé, ce rebord latéral comportant : un orifice de fixation traversant ; une surface d'appui supérieure juxtaposée à l'orifice de fixation traversant ; une surface d'appui inférieure juxtaposée à l'orifice de fixation traversant ;
- un dispositif de rétention de câbles comportant : un socle muni d'un pied inséré dans l'orifice de fixation traversant et comportant des surfaces d'arrêt disposées contre la surface d'appui inférieure et contre la surface d'appui supérieure ; un piston comportant une tige immobilisable par rapport au socle, cette tige étant munie à l'une de ses extrémités d'une semelle disposée dans le canal de guidage de câble.

Dans cet énoncé, la présence d'un rebord latéral inclus la possibilité que le profilé comporte plusieurs rebords latéraux, comme dans l'exemple de la description détaillée. De même, la présence d'un orifice de fixation traversant et d'un dispositif de rétention de câbles inclus la possibilité que le chemin de câble comporte plusieurs orifices de fixation traversant et plusieurs dispositifs de rétention de câbles, comme dans l'exemple de la description détaillée.

Un tel chemin de câble d'aéronef ne comporte aucun élément encombrant le canal de guidage de câble recevant le dispositif de rétention de câble. Le maintien du harnais électrique d'un canal de guidage de câble est ainsi assuré sans interférer avec le contenu du chemin de câble. Le chemin de câble peut ainsi être dimensionné au plus juste. Notamment, la largeur des éléments du profilé (généralement métallique) formant les canaux de guidage de câble peut être réduite, ce qui entraine un gain de matière et de poids.

Dans chaque canal de guidage de câble, le ou les harnais électriques ne sont maintenus que par une semelle plongeante agissant directement sur ces harnais sans nécessiter de maintien depuis l'intérieur du profilé. Cette semelle est maintenue par le dispositif de rétention de câbles dont la seule fixation est située sur une face externe du profilé.

L'invention permet, en plus des gains de masse, de matière et de cout, des gains de productivité. Le temps de montage du chemin de câble d'aéronef est en effet réduit grâce à une mise en place rapide des dispositifs de rétention, par exemple, par simple clipsage.

Des avantages en matière de sureté de montage sont aussi apportés par l'invention : le montage et le serrage des dispositifs de maintien se fait sans erreur possible par la coopération du pied du socle avec l'orifice de fixation traversant.

Le chemin de câble d'aéronef selon l'invention peut comporter les caractéristiques additionnelles suivantes, seules ou en combinaison :
- le socle comporte des pattes élastiques supérieures définissant des surfaces d'arrêt supérieures disposées contre la surface d'appui supérieure du rebord latéral ;
- les pattes élastiques supérieures sont élastiquement déformées en flexion par l'appui des surfaces d'arrêt supérieures sur la surface d'appui supérieure du rebord latéral ;
- le socle comporte des pattes élastiques inférieures définissant des surfaces d'arrêt inférieures disposées contre la surface d'appui inférieure du rebord latéral ;
- les pattes élastiques inférieures comportent une dent permettant un clipsage des pattes élastiques inférieures à travers l'orifice de fixation traversant ;
- les pattes élastiques inférieures sont élastiquement déformées en traction par l'appui des surfaces d'arrêt inférieures sur la surface d'appui inférieure du rebord latéral ;
- la tige est immobilisable par rapport au socle par un mécanisme à cliquet ;
- le mécanisme à cliquet comporte une surface crantée sur la tige et une patte élastique sur le socle, la patte élastique étant adaptée à bloquer la surface crantée de la tige ;
- la tige comporte deux surfaces crantées sur deux de ses faces opposées, et le socle comporte une patte élastique disposée en vis-à-vis de chaque surface crantée ;
- le socle comporte : une surface d'appui latéral disposée contre la face externe de la paroi latérale de laquelle le rebord latéral est saillant ; un pied de réaction disposé en vis-à-vis de la surface d'appui latéral et disposé contre la face interne de la paroi latérale de laquelle le rebord latéral est saillant ;
- le socle comporte une surface d'appui supplémentaire s'étendant parallèlement au plan latéral de rétention et disposée contre une autre paroi du profilé ;
- le pied comporte un pion ajusté dans l'orifice de fixation traversant ;
- le chemin de câble comporte un couvercle fixé sur le rebord latéral.

### PRÉSENTATION DES FIGURES

D'autres caractéristiques et avantages de l'invention ressortiront de la description non limitative qui suit, en référence aux dessins annexés dans lesquels :
- la figure 1 représente en perspective un chemin de câble selon l'invention ;
- la figure 2 et la figure 3 représentent en perspective un dispositif de rétention de câbles du chemin de câble de la figure 1 ;
- la figure 4 est une vue de détail de la figure 1 ;
- la figure 5 illustre un dispositif de rétention de câbles monté sur le chemin de câble ;
- la figure 6 est une vue en coupe du chemin de câble de la figure 1 ;
- la figure 7 est une vue de profil du dispositif de rétention de câbles des figures 2 et 3 ;
- la figure 8 est une vue en perspective d'un dispositif de rétention de câbles relatif à un deuxième mode de réalisation de l'invention ;
- la figure 9 est une vue arrière du dispositif de rétention de câbles de la figure 8.

Les éléments similaires et communs aux divers modes de réalisation portent les mêmes numéros de renvoi aux figures.

### DESCRIPTION DÉTAILLÉE

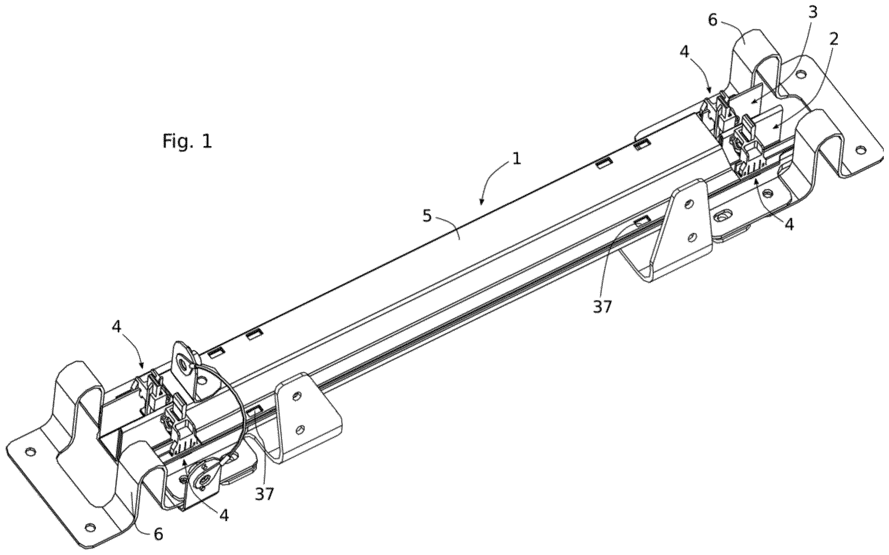

La figure 1 illustre une portion de chemin de câble d'aéronef qui est ici constituée d'un profilé 1. Le présent exemple se réfère à un chemin de câble double, le profilé 1 délimitant deux canaux de guidages de câble 2, 3 parallèles.

Le profilé 1 est réalisé de manière classique dans ce domaine, par exemple par pliage d'une tôle métallique. Les canaux de guidage de câble 2, 3 reçoivent chacun un ou plusieurs harnais électriques ou autres éléments de câblage. Le contenu des canaux 2, 3 est maintenu grâce à des dispositifs de rétention de câble 4 qui sont dans cet exemple disposés à proximité de chaque extrémité des canaux 2, 3.

Entre les dispositifs 4 de rétention de câble d'un même canal 2, 3, le chemin de câble est protégé par un couvercle 5 fixé sur le profilé 1.

Les deux extrémités du profilé 1 sont munies de fixations élastiques 6 permettant de raccorder chaque extrémité du profilé 1 à un autre profilé identique pour constituer le chemin de câble adapté à la longueur souhaitée. Ce chemin de câble complet est ainsi monté sur la structure de l'aéronef de sorte que les différents profilés 1 présentent un degré de liberté les uns par rapport aux autres grâce aux fixations élastiques 6, pour que le chemin de câble suive la déformation de la structure de l'aéronef, notamment durant le vol.

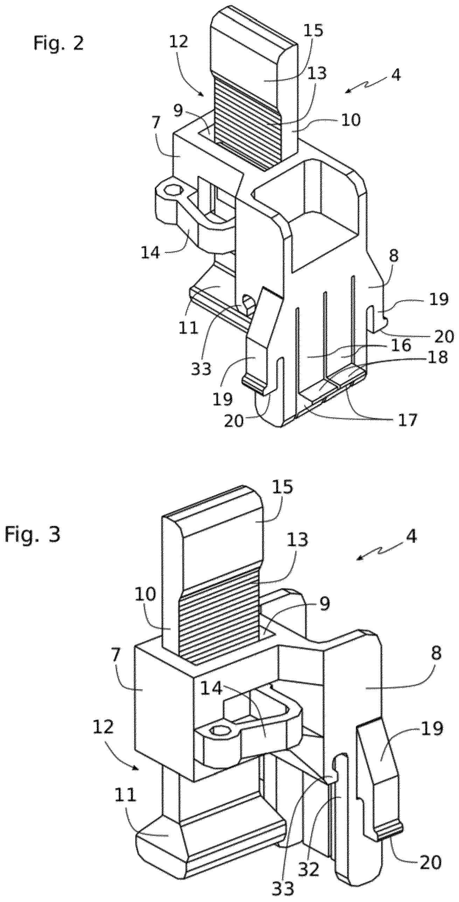

Les figures 2 et 3 illustrent en perspective l'un des dispositifs 4 de rétention de câble utilisé dans le chemin de câble de la figure 1. Les quatre dispositifs 4 de rétention de câble sont ici identiques.

Chaque dispositif 4 de rétention de câble comporte un socle 7 qui est muni d'un pied 8 pour sa fixation au profilé 1.

Le socle 7 comporte un orifice traversant 9 guidant un piston 12. Ce piston 12 comporte une tige 10 munie à l'une de ses extrémités une semelle 11. Le piston 12 est ainsi mobile en translation verticale dans le socle 7 (en référence à l'orientation des figures 2 et 3).

La tige 10, et donc le piston 12, est de plus immobilisable par rapport au socle 7, c'est-à-dire que le dispositif 4 comporte des moyens d'arrêt du piston 12 adaptés à immobiliser le piston dans une de ses positions située entre ses deux positions extrêmes (haute et basse). L'immobilisation de la tige 10 peut être par exemple obtenue par une surface crantée 13 disposée sur la tige 10 coopérant avec une patte élastique 14 rattachée au socle 7. Ces moyens peuvent de plus former un mécanisme à cliquet avec une fonction antiretour.

Dans le présent exemple, le socle 7, le pied 8 et la patte élastique 14 sont réalisés d'une seule pièce par moulage d'un polymère diélectrique dont la résistance est adaptée à l'application et permettant de réaliser une patte élastique 14 suffisamment flexible.

De même, le piston 12 est ici également réalisé d'une seule pièce par moulage d'un polymère diélectrique adapté. Dans ce cas, la tige 10 présente à l'une de ses extrémités une portion évasée formant la semelle 11 et comporte de plus, à son autre extrémité, une butée 15 qui limite la translation du piston 12 dans le socle 7 et empêche, en utilisation normale, la séparation de ces éléments.

Le pied 8 comporte de plus :
- deux pattes élastiques inférieures 16 munies de dents 17 qui définissent des surfaces d'arrêt inférieures 18 ;
- deux pattes élastiques supérieures 19 définissant des surfaces d'arrêt supérieures 20 ;
- deux pions 38 disposés de part et d'autre des pattes élastiques inférieures 16.

Les surfaces d'arrêt inférieures 18 et supérieures 20 sont parallèles.

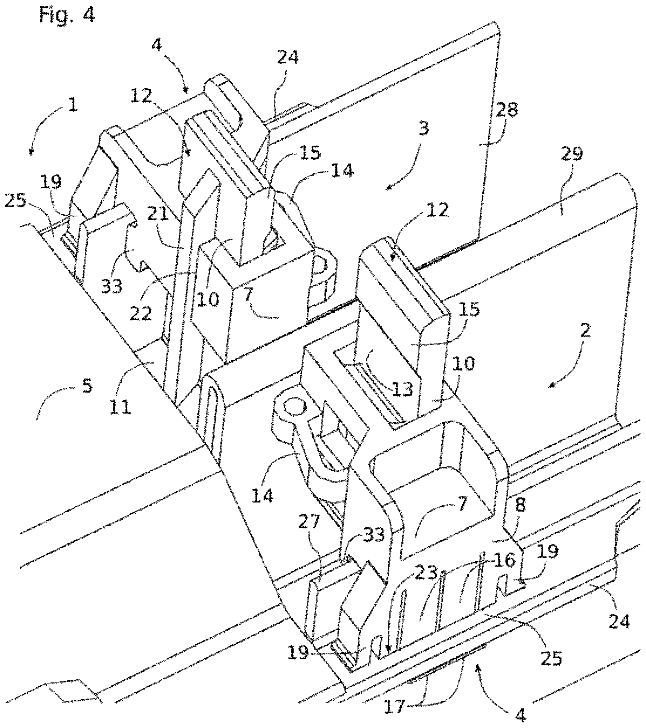

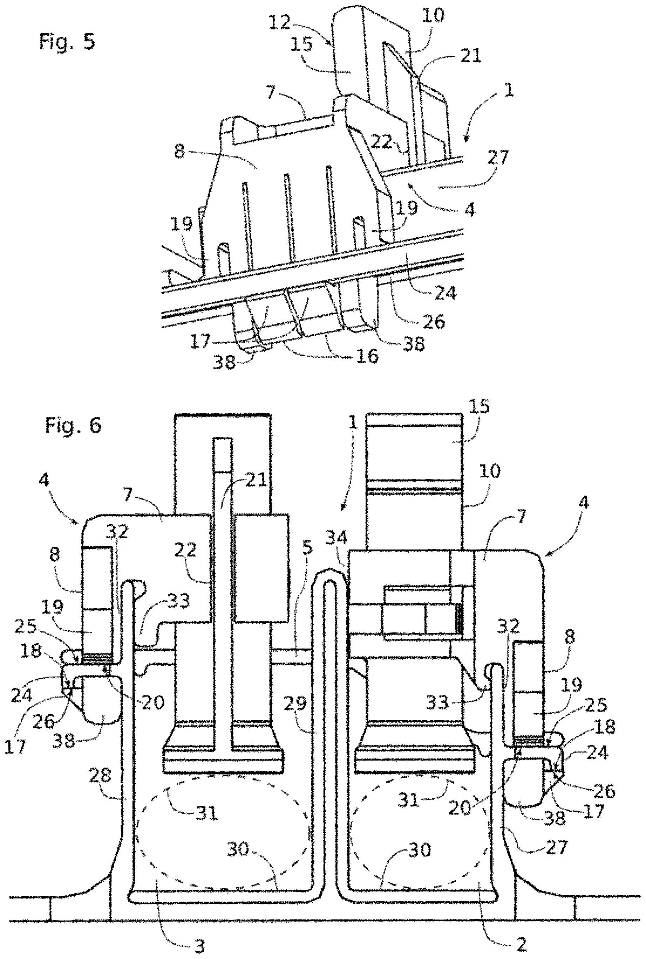

La figure 4 est une vue agrandie de la figure 1, montrant deux dispositifs 4 de rétention de câble côte à côte, et la figure 5 est une figure complémentaire selon un autre angle.

La tige 10 comporte, sur sa face opposée à la surface crantée 13, une nervure de guidage 21 qui coopère avec une rainure 22 du socle 7 pour réaliser un guidage du mouvement de translation du piston 12 dans le socle 7.

Le profilé 1 comporte des parois latérales 27, 28 qui forment ses bords latéraux. Dans le cas d'un profilé à un seul canal de guidage de câbles, les parois latérales sont les seules parois du profilé. Dans le cas du présent exemple, le profilé 1 définit deux canaux 2, 3 et ses parois latérales 27, 28 bornent donc chacune l'un des canaux 2, 3, et le profilé comporte de plus une paroi interne 29 qui sépare les deux canaux 2, 3.

Ces parois latérales 27, 28 comportent une face interne (tournée vers l'intérieur du profilé 1, c'est-à-dire vers les canaux 2, 3), et une face externe (tournée vers l'extérieur).

Le profilé 1 comporte un rebord latéral 24 saillant de la face externe de chacune des parois latérales 27, 28. Pour chaque dispositif 4, les rebords latéraux 24 comportent un orifice de fixation traversant 23, qui est dans cet exemple à section rectangulaire. Les rebords latéraux 24 définissent une surface d'appui supérieure 25 (située sur le dessus du rebord latéral 24, en référence à l'orientation des figures) qui est juxtaposée à l'orifice de fixation traversant 23 et une surface d'appui inférieure 26 (située sur le dessous du rebord latéral 24, en référence à l'orientation des figures) qui est également juxtaposée à chaque orifice de fixation traversant 23.

Les dispositifs 4 de rétention de câble sont fixés au profilé 1 par l'insertion du pied 8 dans l'orifice de fixation traversant 23. Les pions 38 sont dimensionnés pour être ajustés à la taille de l'orifice de fixation traversant 23. Ces pions 38 sont donc en contact avec les bords de l'orifice 23. Les pattes élastiques inférieures 16 sont quant à elles dimensionnées pour que les dents 17 viennent se clipser sur le rebord latéral 24, au bord de l'orifice 23. Les surfaces d'arrêt inférieures 18 viennent alors contre la surface d'appui inférieure 26 du rebord latéral 24. Les dents 17 présentent à cet effet un profil permettant le clipsage (un profil triangulaire dans cet exemple).

La figure 6 est une vue en coupe transversale du chemin de câble et illustre le montage des deux dispositifs 4 de rétention de câble illustrés à la figure 4.

Chacune des parois latérales 27, 28 s'étend parallèlement à un plan de rétention latéral. Ce plan de rétention latéral est ici défini comme un plan qui est perpendiculaire à la paroi de fond 30 sur laquelle chemine le câblage, et qui s'étend le long de l'axe longitudinal du profilé 1, c'est-à-dire dans le sens de parcours du câblage.

Sur la figure 6, les harnais électriques qui sont immobilisés par les dispositifs 4 de rétention de câbles sont schématisés par les sections en pointillés 31.

Chaque rebord latéral 24 est formé d'un profilé qui présente sur le dessus la surface d'appui supérieure 25 et qui présente une extrémité recourbée formant la surface d'appui inférieure 26. La figure 6 montre l'appui des surfaces d'arrêt supérieures 20 des pattes 19 sur la surface d'appui supérieure 25, ainsi que l'appui des surfaces d'arrêt inférieures 18 des dents 17 sur les surfaces d'appui inférieures 26.

L'écart entre les surfaces d'arrêt inférieures 18 et les surfaces d'arrêt supérieures 20 est dimensionné pour enserrer le rebord latéral 24, au vu de l'écartement entre les surfaces d'appui 25, 26. La distance entre les surfaces d'arrêt 18, 20 est de préférence légèrement inférieure à la distance entre les surfaces d'appui 25, 26, de sorte que le clipsage du pied 8 dans l'orifice de fixation 23 entraine une déformation élastique des pattes 16, 19, pour une meilleure tenue du socle 7 sur le rebord latéral 24. Les pattes élastiques supérieures 19 sont alors élastiquement déformées en flexion par l'appui des surfaces d'arrêt supérieures 20 sur la surface d'appui supérieure 25 du rebord latéral 24. Les pattes élastiques inférieures 16 sont quant à elles élastiquement déformées en traction par l'appui des surfaces d'arrêt inférieures 18 sur la surface d'appui inférieure 26 du rebord latéral 24.

Ce maintien par les surfaces d'arrêt 18, 20 est associé au maintien procuré par les pions 38 qui sont ajustés dans l'orifice de fixation traversant 23.

Le socle 7 comporte de plus :
- une surface d'appui latérale 32 qui s'étend perpendiculairement aux surfaces d'arrêt 18, 20 et qui est destinée à prendre appui sur la paroi latérale 27, 28 ;
- un pied de réaction 33 qui est situé à une distance de la surface d'appui latérale 32 correspondant sensiblement à l'épaisseur de la paroi latérale 27, 28.

La paroi latérale 27, 28 est ainsi enserrée entre la surface d'appui latérale 32 et le pied de réaction 33.

Ces éléments permettent d'assurer le montage en porte-à-faux du socle 7 au-dessus du canal 2, 3 de guidage.

Dans cet exemple, les deux canaux 2, 3 de guidage de câble sont différents : la paroi latérale 27 est plus basse que la paroi latérale 28. Les dispositifs 4 présentent également des variantes : le pied de réaction 33 du dispositif 4 du canal 3 est plus grand que le pied de réaction 33 du dispositif 4 du canal 2. Les dimensions du pied de réaction 33 et de la surface d'appui latérale 32 sont fonction de la force à prévoir pour l'application.

Cette fixation du dispositif 4 de rétention de câbles permet le maintien optimal des harnais électriques 31 par un blocage du piston 12 contre le harnais.

Optionnellement, la tenue du dispositif 4 de rétention de câble peut être complétée par une surface d'appui supplémentaire 34 prévue sur le socle 7, et par un dimensionnement du socle 7 de sorte que cette surface supplémentaire 34 vienne en appui contre la paroi interne 29 (ou la paroi latérale opposée, dans le cas d'un profilé à un seul canal de guidage de câble). Sur la figure 6, le dispositif 4 du canal 2 illustre cette option.

Le procédé de mise en place du chemin de câble d'aéronef, lors du montage de l'aéronef, est considérablement simplifié, sécurisé, et accéléré. Il comporte simplement les étapes suivantes :
- la fixation des différents profilés 1 bout à bout sur la structure de l'aéronef, et la mise en place des fixations élastiques 6, de manière à constituer le chemin de câble ;
- la pose des harnais électriques dans les canaux 2, 3 de guidage de câble ;
- le clipsage des dispositifs 4 de rétention de câbles dans leur orifice de fixation traversant 23, suivi d'une pression sur le piston 12 (manuel ou automatisé et calibré) de sorte que la semelle 11 descende dans le canal 2, 3, jusqu'à venir au contact des harnais. Cette descente du piston 12 se fait avec la patte élastique 14 qui parcours la surface crantée 13, et qui assure une fonction antiretour lorsque la semelle 11 est en place.

Le câblage est alors terminé et la mise en place du couvercle 5 peut avoir lieu. Avantageusement, les rebords latéraux 24 permettent de plus la fixation du couvercle 5 par des agrafes 37 ou par tout autre moyen permettant de maintenir le couvercle 5 contre l'un des rebords latéraux 24, ou les deux.

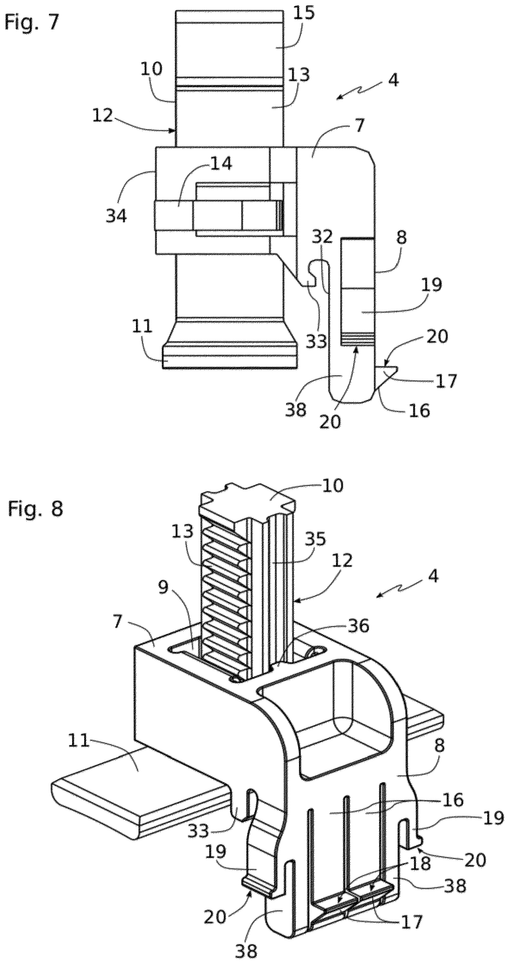

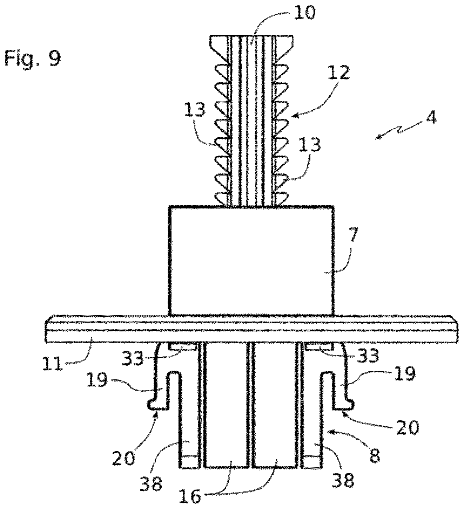

Les figures 8 et 9 illustrent un deuxième mode de réalisation du dispositif 4 de rétention de câble.

Selon ce deuxième mode de réalisation, la tige 10 présente une section qui est plus importante que dans le premier mode de réalisation et qui dont la forme permet un guidage en translation avec le socle 7. La tige 10 comporte deux rainures 35 coopérant avec deux nervures 36 du socle 7. La tige 10 comporte de plus deux surfaces crantées 13 sur deux faces opposées de la tige 10.

La semelle 11 est par ailleurs constituée d'un parallélépipède dont la longueur (c'est-à-dire la dimension prise le long de l'axe longitudinal du profilé 1) est supérieure aux dimensions du socle 7.

Ce dispositif 4 de rétention de câble est adapté à fournir une force de réaction supérieure sur une surface supérieure et permet notamment de maintenir des harnais électriques de section ou de masse plus importante.

Optionnellement, le piston 12 peut être réalisé en deux parties, avec une tige 10 moulée dans un polymère rigide, et une semelle 11 moulée dans un matériau élastomère pour épouser la forme des harnais électriques.

Les surfaces crantées 13, illustrées ici de profil à la figure 9, présentent des crans de section triangulaire conformés pour réaliser un effet d'antiretour.

## Revendications

1. Chemin de câble d'aéronef, comportant un profilé (1) qui comprend deux parois latérales (27,28) s'étendant parallèlement à un plan latéral de rétention, chaque paroi latérale (27,28) présentant une face externe et une face interne, ce profilé (1) délimitant au moins un canal (2,3) de guidage de câble s'étendant parallèlement au plan latéral de rétention, ce chemin de câble d'aéronef étant **caractérisé en ce qu'**il comporte :
- un rebord latéral (24) saillant de la face externe d'une paroi latérale (24,28) du profilé (1), ce rebord latéral (24) comportant : un orifice de fixation traversant (23) ; une surface d'appui supérieure (25) juxtaposée à l'orifice de fixation traversant (23) ; une surface d'appui inférieure (26) juxtaposée à l'orifice de fixation traversant (23) ;
- un dispositif (4) de rétention de câbles comportant : un socle (7) muni d'un pied (8) inséré dans l'orifice de fixation traversant (23) et comportant des surfaces d'arrêt (18,20) disposées contre la surface d'appui inférieure (26) et contre la surface d'appui supérieure (25) ; un piston (12) comportant une tige (10) immobilisable par rapport au socle (7), cette tige (10) étant munie à l'une de ses extrémités d'une semelle (11) disposée dans le canal (2,3) de guidage de câble.

2. Chemin de câble d'aéronef selon la revendication 1, **caractérisé en ce que** le socle (7) comporte des pattes élastiques supérieures (19) définissant des surfaces d'arrêt supérieures (20) disposées contre la surface d'appui supérieure (25) du rebord latéral (24).

3. Chemin de câble d'aéronef selon la revendication 2, **caractérisé en ce que** les pattes élastiques supérieures (19) sont élastiquement déformées en flexion par l'appui des surfaces d'arrêt supérieures (20) sur la surface d'appui supérieure (25) du rebord latéral (24).

4. Chemin de câble d'aéronef selon l'une des revendications précédentes, **caractérisé en ce que** le socle (7) comporte des pattes élastiques inférieures (16) définissant des surfaces d'arrêt inférieures (18) disposées contre la surface d'appui inférieure (26) du rebord latéral (24).

5. Chemin de câble d'aéronef selon la revendication 4, **caractérisé en ce que** les pattes élastiques inférieures (16) comportent une dent (17) permettant un clipsage des pattes élastiques inférieures (16) à travers l'orifice de fixation traversant (23).

6. Chemin de câble d'aéronef selon l'une des revendications 4 ou 5, **caractérisé en ce que** les pattes élastiques inférieures (16) sont élastiquement déformées en traction par l'appui des surfaces d'arrêt inférieures (18) sur la surface d'appui inférieure (26) du rebord latéral (24).

7. Chemin de câble d'aéronef selon l'une des revendications précédentes, **caractérisé en ce que** la tige (10) est immobilisable par rapport au socle (7) par un mécanisme à cliquet.

8. Chemin de câble d'aéronef selon la revendication 7, **caractérisé en ce que** le mécanisme à cliquet comporte une surface crantée (13) sur la tige (10) et une patte élastique (14) sur le socle (7), la patte élastique (14) étant adaptée à bloquer la surface crantée (13) de la tige (10).

9. Chemin de câble d'aéronef selon la revendication 8, **caractérisé en ce que** la tige (10) comporte deux surfaces crantées (13) sur deux de ses faces opposées, et **en ce que** le socle (7) comporte une patte élastique (14) disposée en vis-à-vis de chaque surface crantée (13).

10. Chemin de câble d'aéronef selon l'une des revendications précédentes, **caractérisé en ce que** le socle comporte :
- une surface d'appui latéral (32) disposée contre la face externe de la paroi latérale (27,28) de laquelle le rebord latéral (24) est saillant ;
- un pied de réaction (33) disposé en vis-à-vis de la surface d'appui latéral (32) et disposé contre la face interne de la paroi latérale (27,28) de laquelle le rebord latéral (24) est saillant.

11. Chemin de câble d'aéronef selon l'une des revendications précédentes, **caractérisé en ce que** le socle comporte une surface d'appui supplémentaire s'étendant parallèlement au plan latéral de rétention et disposée contre une autre paroi du profilé.

12. Chemin de câble d'aéronef selon l'une des revendications précédentes, **caractérisé en ce que** le pied (8) comporte un pion (38) ajusté dans l'orifice de fixation traversant (23).

13. Chemin de câble d'aéronef selon l'une des revendications précédentes, **caractérisé en ce qu'**il comporte un couvercle (5) fixé sur le rebord latéral (24).

## Patentansprüche

1. Flugzeugkabelkanal mit einem Profil (1), das zwei Seitenwände (27, 28) aufweist, die sich parallel zu einer seitlichen Rückhalteebene erstrecken, wobei jede Seitenwand (27, 28) eine Außenseite und eine Innenseite aufweist, wobei dieses Profil (1) mindestens einen Kabelführungskanal (2, 3) begrenzt, der sich parallel zur seitlichen Rückhalteebene erstreckt, wobei dieser Flugzeugkabelkanal **dadurch gekennzeichnet ist, dass** er Folgendes aufweist:
- einen Seitenrand (24), der von der Außenseite einer Seitenwand (24, 28) des Profils (1) vorsteht, wobei dieser Seitenrand (24) Folgendes aufweist: eine durchgehende Befestigungsöffnung (23); eine obere Auflagefläche (25), die neben der durchgehenden Befestigungsöffnung (23) liegt; eine untere Auflagefläche (26), die neben der durchgehenden Befestigungsöffnung (23) liegt;
- eine Vorrichtung (4) zum Zurückhalten von Kabeln mit:
einem Sockel (7) mit einem Fuß (8), der in die durchgehende Befestigungsöffnung (23) eingesetzt ist und Anschlagflächen (18, 20) aufweist, die gegen die untere Auflagefläche (26) und gegen die obere Auflagefläche (25) angeordnet sind; einem Kolben (12) mit einer Stange (10), die in Bezug auf den Sockel (7) feststellbar ist, wobei diese Stange (10) an einem ihrer Enden mit einer Sohle (11) versehen ist, die in dem Kabelführungskanal (2, 3) angeordnet ist.

2. Flugzeugkabelkanal nach Anspruch 1, **dadurch gekennzeichnet, dass** der Sockel (7) obere elastische Laschen (19) aufweist, die obere Anschlagflächen (20) definieren, die gegen die oberen Auflagefläche (25) des Seitenrands (24) angeordnet sind.

3. Flugzeugkabelkanal nach Anspruch 2, **dadurch gekennzeichnet, dass** die oberen elastischen Laschen (19) durch das Aufliegen der oberen Anschlagflächen (20) auf der oberen Auflagefläche (25) des Seitenrands (24) elastisch biegeverformt werden.

4. Flugzeugkabelkanal nach einem der vorhergehenden Ansprüche, **dadurch gekennzeichnet, dass** der Sockel (7) untere elastische Laschen (16) aufweist, die untere Anschlagflächen (18) definieren, die gegen die untere Auflagefläche (26) des Seitenrands (24) angeordnet sind.

5. Flugzeugkabelkanal nach Anspruch 4, **dadurch gekennzeichnet, dass** die unteren elastischen Laschen (16) einen Zahn (17) aufweisen, der ein Einklipsen der unteren elastischen Laschen (16) durch die durchgehende Befestigungsöffnung (23) ermöglicht.

6. Flugzeugkabelkanal nach einem der Ansprüche 4 oder 5, **dadurch gekennzeichnet, dass** die unteren elastischen Laschen (16) durch das Aufliegen der unteren Anschlagflächen (18) auf der unteren Auflagefläche (26) des Seitenrands (24) elastisch auf Zug verformt werden.

7. Flugzeugkabelkanal nach einem der vorhergehenden Ansprüche, **dadurch gekennzeichnet, dass** die Stange (10) durch einen Sperrklinkenmechanismus in Bezug auf den Sockel (7) feststellbar ist.

8. Flugzeugkabelkanal nach Anspruch 7, **dadurch gekennzeichnet, dass** der Sperrklinkenmechanismus eine gezahnte Oberfläche (13) an der Stange (10) und eine elastische Lasche (14) am Sockel (7) aufweist, wobei die elastische Lasche (14) dazu geeignet ist, die gezahnte Oberfläche (13) der Stange (10) zu blockieren.

9. Flugzeugkabelkanal nach Anspruch 8, **dadurch gekennzeichnet, dass** die Stange (10) zwei gezahnte Oberflächen (13) auf zwei ihrer gegenüberliegenden Seiten aufweist, und dass der Sockel (7) eine elastische Lasche (14) aufweist, die gegenüber jeder gezahnten Oberfläche (13) angeordnet ist.

10. Flugzeugkabelkanal nach einem der vorhergehenden Ansprüche, **dadurch gekennzeichnet, dass** der Sockel Folgendes aufweist:
- eine seitliche Auflagefläche (32), die gegen die Außenseite der Seitenwand (27, 28) angeordnet ist, von der der Seitenrand (24) vorsteht;
- einen Reaktionsfuß (33), der der seitlichen Auflagefläche (32) gegenüberliegt und gegen die Innenseite der Seitenwand (27, 28) angeordnet ist, von der der Seitenrand (24) vorsteht.

11. Flugzeugkabelkanal nach einem der vorhergehenden Ansprüche, **dadurch gekennzeichnet, dass** der Sockel eine zusätzliche Stützfläche aufweist, die sich parallel zur seitlichen Rückhalteebene erstreckt und gegen eine andere Wand des Profils angeordnet ist.

12. Flugzeugkabelkanal nach einem der vorhergehenden Ansprüche, **dadurch gekennzeichnet, dass** der Fuß (8) einen Stift (38) aufweist, der in die durchgehende Befestigungsöffnung (23) eingepasst ist.

13. Flugzeugkabelkanal nach einem der vorhergehenden Ansprüche, **dadurch gekennzeichnet, dass** er einen Deckel (5) aufweist, der am Seitenrand (24) befestigt ist.

## Claims

1. An aircraft cable tray comprising a profile section (1) which comprises two lateral walls (27,28) running parallel to a retention lateral plane, each lateral wall (27,28) having an external face and an internal face, this profile section (1) delimiting at least one cable guiding channel (2,3) running parallel to the retention lateral plane, this aircraft cable tray being **characterized in that** it comprises:
- a lateral lip (24) projecting from the external face of one lateral wall (24,28) of the profile section (1), this lateral lip (24) comprising: a fixing through-orifice (23); an upper bearing surface (25) juxtaposed with the fixing through-orifice (23); a lower bearing surface (26) juxtaposed with the fixing through-orifice (23);
- a cable retention device (4) comprising: a base (7) equipped with a leg (8) inserted into the fixing through-orifice (23) and comprising stop surfaces (18,20) positioned against the lower bearing surface (26) and against the upper bearing surface (25); a piston (12) comprising a rod (10) that can be immobilized with respect to the base (7), this rod (10) being equipped at one of its ends with a foot (11) positioned in the cable guide channel (2,3).

2. The aircraft cable tray as claimed in claim 1, **characterized in that** the base (7) comprises upper elastic tabs (19) defining upper stop surfaces (20) which are positioned against the upper bearing surface (25) of the lateral lip (24).

3. The aircraft cable tray as claimed in claim 2, **characterized in that** the upper elastic tabs (19) are elastically deformed in bending by the pressing of the upper stop surfaces (20) on the upper bearing surface (25) of the lateral lip (24).

4. The aircraft cable tray as claimed in one of the preceding claims, **characterized in that** the base (7) comprises lower elastic tabs (16) defining lower stop surfaces (18) which are positioned against the lower bearing surface (26) of the lateral lip (24).

5. The aircraft cable tray as claimed in claim 4, **characterized in that** the lower elastic tabs (16) comprise a barb (17) allowing the lower elastic tabs (16) to be clip-fastened through the fixing through-orifice (23).

6. The aircraft cable tray as claimed in one of claims 4 or 5, **characterized in that** the lower elastic tabs (16) are elastically deformed in tension by the pressing of the lower stop surfaces (18) against the lower bearing surface (26) of the lateral lip (24).

7. The aircraft cable tray as claimed in one of the preceding claims, **characterized in that** the rod (10) is immobilized relative to the base (7) by a ratchet mechanism.

8. The aircraft cable tray as claimed in claim 7, **characterized in that** the ratchet mechanism comprises a toothed surface (13) on the rod (10) and an elastic tab (14) on the base (7), the elastic tab (14) being designed to immobilize the toothed surface (13) of the rod (10).

9. The aircraft cable tray as claimed in claim 8, **characterized in that** the rod (10) comprises two toothed surfaces (13) on two of its opposite faces, and **in that** the base (7) comprises an elastic tab (14) positioned facing each toothed surface (13).

10. The aircraft cable tray as claimed in one of the preceding claims, **characterized in that** the base comprises:
- a lateral bearing surface (32) positioned against the external face of the lateral wall (27,28) from which the lateral lip (24) projects;
- a reaction leg (33) positioned facing the lateral bearing surface (32) and positioned against the internal face of the lateral wall (27,28) from which the lateral lip (24) projects.

11. The aircraft cable tray as claimed in one of the preceding claims, **characterized in that** the base comprises an additional bearing surface running parallel to the retention lateral plane and positioned against another wall of the profile section.

12. The aircraft cable tray as claimed in one of the preceding claims, **characterized in that** the leg (8) comprises a prong (38) fitted into the fixing through-orifice (23).

13. The aircraft cable tray as claimed in one of the preceding claims, **characterized in that** it comprises a cover (5) fixed on the lateral lip (24).
